# EUROPÄISCHE PATENTSCHRIFT

(11) **EP 2 188 550 B1**
(45) Veröffentlichungstag und Bekanntmachung des Hinweises auf die Patenterteilung: **31.08.2011**
(21) Anmeldenummer: 08784402.3
(22) Anmeldetag: 30.07.2008
(51) Int. Cl.: F16H 59/02

(54) **BETÄTIGUNGSEINRICHTUNG MIT SCHALTSCHLITTENSPERRE**
ACTUATING DEVICE WITH SHIFT CARRIAGE LOCK
DISPOSITIF D'ACTIONNEMENT DOTÉ D'UN BLOCAGE DU COULISSEAU DE CHANGEMENT DE RAPPORT

(30) Priorität: 14.08.2007 DE 102007038495
(43) Veröffentlichungstag der Anmeldung: 26.05.2010
(73) Patentinhaber: ZF Friedrichshafen AG, 88038 Friedrichshafen (DE)
(72) Erfinder: WEIFELS, Carsten, 49453 Barver (DE)
(86) Internationale Anmeldenummer: PCT/DE2008/050021
(87) Internationale Veröffentlichungsnummer: WO 2009/021509

(56) Entgegenhaltungen:
- EP-A- 1 450 078
- WO-A-2006/074644
- DE-A1- 10 252 009
- DE-C1- 10 003 140
- US-A1- 2006 032 723

## Beschreibung

Die Erfindung betrifft eine Betätigungseinrichtung zur Übertragung von Schaltbefehlen an ein Automatikgetriebe eines Kraftfahrzeugs, gemäß dem Oberbegriff von Patentanspruch 1.

Eine gattungsgemäße Betätigungseinrichtung ist beispielsweise aus der Patentschrift DE 102 52 009 B4 der Anmelderin bekannt. Die bekannte Betätigungseinrichtung umfasst einen mittels einer Wählgasse zwischen einer Automatikschaltgasse und einer Sequenzschaltgasse bewegbaren Wählhebel. Ferner umfasst die bekannte Betätigungseinrichtung eine Übertragungskinematik mit einem Schaltschlitten zur lösbaren Kopplung der Wählhebelbewegungen an ein Getriebe-Übertragungselement, beispielsweise an ein Schaltgestänge oder an einen mit dem Getriebe verbundenen Seilzug.

Bei derartigen gattungsgemäßen Betätigungseinrichtungen, die sowohl eine Automatikschaltgasse als auch einen Sequenzschaltgasse aufweisen, ist es notwendig, dass die zur Betätigung des Getriebes in der Automatikschaltgasse verwendete mechanische Verbindung zwischen dem Wählhebel und dem Getriebe immer dann getrennt wird, wenn der Wählhebel sich in der Tippgasse bzw. Sequenzschaltgasse befindet, da die Übertragung der Schaltbefehle in der Sequenzschaltgasse an das Getriebe nicht - wie in der Automatikschaltgasse - mechanisch, sondern auf elektrischem bzw. elektronischem Wege erfolgt. Um somit eine leichtgängige Beweglichkeit des Wählhebels in der Sequenzschaltgasse zu ermöglichen, und um gleichzeitig unerwünschte Veränderungen der eingelegten Fahrstufe zu vermeiden, während der Wählhebel in der Sequenzschaltgasse bewegt wird, erfolgt bei den gattungsgemäßen Betätigungseinrichtungen eine mechanische Trennung zwischen Wählhebel und Getriebe-Übertragungselement bzw. Seilzug.

Dabei ist es jedoch gleichzeitig notwendig, das vom Wählhebel nun kinematisch getrennte Getriebe-Übertragungselement, also beispielsweise den zum Getriebe führenden Seilzug, so lange mechanisch zu blockieren, bis das Übertragungselement bei der Rückkehr des Wählhebels in die Automatikschaltgasse wieder kinematisch mit dem Wählhebel gekoppelt wird.

Bei den aus dem Stand der Technik bekannten Betätigungseinrichtungen erfolgt die lösbare kinematische Kopplung zwischen dem Wählhebel und dem Getriebe-Übertragungselement - also zumeist dem Getriebe-Seilzug - wie auch gleichzeitig die Blockierung bzw. Verriegelung des Übertragungselements bei ausgekoppeltem und in der Sequenzschaltgasse befindlichem Wählhebel zumeist durch eine aufwändige mechanische Sperrmimik.

Konkret wird im Stand der Technik dabei der Versuch unternommen, mit ein und derselben Seitwärts-Hebelbewegung des Wählhebels - entlang der Wählgasse zwischen Automatikschaltgasse und Sequenzschaltgasse - sowohl die mechanische Verbindung des Wählhebels mit dem Schaltschlitten bzw. Getriebe-Übertragungselement zu trennen, als auch zusätzlich und gleichzeitig den Schaltschlitten bzw. das Getriebe-Übertragungselement relativ zum Gehäuse der Betätigungseinrichtung mechanisch festzulegen und damit gegen Betätigung oder Verschiebungen zu sperren.

Dieses kinematische Lösen des Wählhebels vom Schaltschlitten und die gleichzeitig damit erfolgende Sperrung des Schaltschlittens relativ zum Gehäuse der Betätigungseinrichtung führt bei den aus dem Stand der Technik bekannten Lösungen jedoch bisher zumeist zu mechanisch äußerst aufwändigen und komplizierten Sperrmechanismen mit zahlreichen ineinandergreifenden Einzelteilen. Dabei ist es aufgrund der an einem Wählhebel möglicherweise auftretenden potentiell hohen Missbrauchskräfte zusätzlich erforderlich, dass gerade die komplizierte Sperrmimik sehr robust ausgeführt werden muss, weshalb auch vergleichsweise teure Bauteile eingesetzt werden müssen.

Ein weiteres Problem der beschriebenen, bekannten Betätigungseinrichtungen liegt zudem darin, dass aufgrund der aufwändigen und aufgrund potentiell hoher Kräfte robust auszuführenden Sperrmechanik die Wählhebelkinematik tendenziell schwergängig und kraftaufwändig wird, was wiederum dem Bedienkomfort abträglich ist.

Mit diesem Hintergrund ist es Aufgabe der vorliegenden Erfindung, eine Betätigungseinrichtung für ein Automatikgetriebe zu schaffen, bei der die Sperrmimik zur Trennung zwischen Wählhebel und Übertragungselement einerseits, und zur Sperrung des Übertragungselements, während sich der Wählhebel in der Sequenzschaltgasse befindet andererseits, konstruktiv maßgeblich vereinfacht werden kann, wobei gleichzeitig ein unter allen Betriebszuständen sicherer Betrieb sowie eine leichtgängige Betätigung gewährleistet sein soll. Eine weitere Aufgabe der vorliegenden Erfindung ist es, Kosteneinsparungspotenziale gegenüber den aus dem Stand der Technik bekannten, konstruktiv aufwändigen Betätigungseinrichtungen zu eröffnen.

Diese Aufgabe wird gelöst durch eine Betätigungseinrichtung gemäß der vorliegenden Erfindung. Bevorzugte Ausführungsformen sind Gegenstand der Unteransprüche.

In für sich genommen zunächst einmal bekannter Weise dient die Betätigungseinrichtung gemäß der vorliegenden Erfindung der Übertragung von Schaltbefehlen insbesondere an ein Automatikgetriebe eines Kraftfahrzeugs.

Hierzu umfasst die erfindungsgemäße Betätigungseinrichtung einen in einer Wählgasse zwischen einer Automatikschaltgasse und einer Sequenzschaltgesse seitwärts hin und her bewegbaren Wählhebel, ferner einen Schaltschlitten zur Weitergabe der Schaltbefeble an ein Getriebe-Übertragungselement, beispielsweise an ein Gestänge oder an einen Seilzug, sowie eine Trenneinrichtung zur Trennung der Kraftübertragung zwischen Wählhebel und Schaltschlitten.

Erfindungsgemäß zeichnet sich die Betätigungseinrichtung jedoch dadurch aus, dass die Betätigungseinrichtung eine aktuatorische Shiftlock-Sperreinrichtung mit Sperraktuator umfasst, mit der sich die Wählhebelstellung - zur Realisierung der Shiftlock-Sicherheitsfunktion- in zumindest einer Wählhebsletellung blockieren lässt, wobei der Sperraktuator der Shiftlock-Sperreinrichtung gleichzeitig zur Blockierung des Scheltschlittens herangezogen wird Hierzu ist der Schaltschlittens mittels der Shiftlock-Sperreinrichtung zusätzlich blockierbar. Sobald der Wählhebel entlang der Wählgasse aus der Automatikschaltgasse in die Sequenzschaltgasse bewegt wird oder bei Eintritt des Wählhebels in die Sequenzshaltgasse. Auf diese Weise ergibt sich gegenüber dem Stand der Technik zunächst einmal eine konstruktiv besonders einfache Realisierung der Festlegung der Getriebebetättgung- also der Blockierung des Schaltschlittens bzw. des Getriebe-Übertragungselemants - während sich der Wählhebel in der Sequenzschaltgasse befindet.

Gegenüber dem Stand der Technik besitzt die erfindungsgemäße Betätigungseinrichtung dabei insbesondere den entscheidenden Vorteil, mit einem Bruchteil der Anzahl an notwendigen Bauteilen auszukommen, wobei diese Bauteile zudem vergleichsweise einfach und robust Schalten werden können.

Die Erfindung macht es sich dabei zunutze, dass in Betätigungseinrichtungen für Automatikgetriebe in den meisten Fällen ohnehin bereits ein Sperraktuator vorhanden ist der zur Realisierung der sicherheitsrelevanten Shiftlock-Sperre benötigt wird. Der vorhandene Sperraktuator dient dabei - für sich genommen bekannt - im Sinne der Shiftlock-Sperre zunächst einmal dazu, den Wählhebel bei eingelegter Parksperre "P" bzw. Neutralstellung "N" solange in der aktuellen Wählhebelposition zu fixieren, bis der Fahrer auf das Bremspedal tritt und dieses getreten hält, während er den Wählhebel aus der Parksperrenposition bzw. Neutralstellung heraus bewegt. Hiermit wird etwaiges unkontrolliertes Anrollen des Fahrzeuges beim Einlegen einer Fahrstufe vermieden.

Erfindungsgemäß jedoch wird nun der ohnehin vorhandene Sperraktuator der Shiftlock-Sperre zusätzlich auch dazu herangezogen, den Schaltschlitten der Betätigungseinrichtung zu fixieren, sobald der Wählhebel entlang der Wählgasse aus der Automatikschaltgasse in die Sequenzschaltgasse bewegt wird

Gemäß einer weiteren bevorzugten Ausführungsform der Erfindung ist die Betätigungseinrichtung zur Aktivierung des Sperraktuators bei Eintritt des Wählhebels in die Sequenzschaltgasse (manueller Gangwechsel) eingerichtet. Auf diese Weise wird sichergestellt, dass der Sperrschlitten und das Getriebe-Übertragungselement erst dann blockiert werden, wenn der Wählhebel komplett in die Sequenzschaltgasse bewegt wurde. Unnötige Aktivierung der Sperreinrichtung bei Berührung oder bei nur teilweise Bewegung des Wählhebels entlang der Wählgasse wird dank dieser Ausführungsform vermieden.

Dies bedeutet mit anderen Worten, dass die aufwändigen Sperrmimiken, mit denen im Stand der Technik der Schaltschlitten bei Seitwärtsbewegung des Wählhebels aus der Automatikschaltgasse in die Sequenzschaltgasse entkoppelt und blockiert wird, dank der Erfindung komplett entfallen können, zugunsten einer konstruktiv erheblich einfacher und robuster ausführbaren Sperreinrichtung für den Schaltschlitten, die auf Basis des ohnehin vorhandenen Sperraktuators der Shiftlock-Sperre arbeitet.

Es ist somit lediglich noch mit konstruktiv für sich genommen bekannten Mitteln dafür zu sorgen - z.B. in Form einer als Kulisse ausgebildeten Trenneinrichtung zur Trennung der Kraftübertragung zwischen Wählhebel und Schaltschlitten - dass der Wählhebel bei seiner Seitwärtsbewegung aus der Automatikschaltgasse in die Sequenzschaltgasse kinematisch vom Getriebe-Übertragungselement bzw. vom Schaltschlitten getrennt wird.

Gleichzeitig wird der Schaltschlitten - erfindungsgemäß - mittels des Sperraktuators der Shiftlock-Sperre in seiner aktuellen Position festgelegt.

Die Erfindung lässt sich dabei unabhängig davon verwirklichen, wie der Sperraktuator konstruktiv ausgebildet und angeordnet ist, solange sich der Schaltschlitten mittels des Sperraktuators blockieren lässt. Gemäß einer besonders bevorzugten Ausführungsform der Erfindung ist der Sperraktuator jedoch durch einen elektromagnetischen Aktuator mit beweglichem Ankerstift gebildet.

Dank dieser Ausführungsform ergibt sich eine besonders einfache und robuste konstruktive Ausführung. Der Ankerstift kann elektromagnetisch ausgefahren werden und dabei direkt in entsprechende, am Schaltschlitten angeordnete Sperrkammern eintauchen. Dabei können die verschiedenen Sperrkammern für die unterschiedlichen Sperrpositionen der Shiftlock-Sperre (Sperrung in der Parksperrenposition bzw. in der Neutralstellung des Wählhebels) sowie für die Sperrung des Getriebe-Übertragungselements - bei Positionierung des Wählhebels in der Sequenzschaltgasse - konstruktiv sehr einfach als nebeneinander angeordnete Sperrkammern ausgebildet werden.

Eine weitere, besonders bevorzugte Ausführungsform der Erfindung sieht vor, dass die Trenneinrichtung zur Trennung der Kraftübertragung zwischen Wählhebel und Schaltschlitten eine im Wesentlichen symmetrische, H-förmige Kulissenausnehmung im Schaltschlitten sowie einen mit dem Wählhebel verbundenen Kulissenstift umfasst.

Dank der H-förmigen Kulissenausnehmung kann die Betätigungseinrichtung mit lediglich minimalen Änderungen sowohl für Fahrzeuge mit Rechtslenkung als auch für Fahrzeuge mit Linkslenkung angepasst werden. Denn die H-förmige Kulissenausnehmung bietet auf diese Weise für die Automatikschaltgasse einen mittleren Kraftübertragungsbereich zwischen Kulissenstift und Schaltschlitten, sowie für den manuellen Gangwechsel jeweils einen links bzw. rechts von dem mittleren Kraftübertragungsbereich angeordneten Bewegungsbereich für den Kulissenstift.

Je nachdem, ob die Betätigungseinrichtung in einem Fahrzeug mit Rechtslenkung oder in einem Fahrzeug mit Linkslenkung eingesetzt werden soll, lässt sich mittels Auswahl einer passenden Schaltkulisse für den Wählhebel der linke bzw. der rechte Bewegungsbereich in der H-förmigen Kulissenausnehmung des Schaltschlittens zum Einsatz bringen. Es sind mit anderen Worten zum Einsatz der erfindungsgemäßen Betätigungseinrichtung sowohl in Fahrzeugen mit Rechtslenkung als auch in Fahrzeugen mit Linkslenkung keinerlei Änderungen an der Trenneinrichtung oder der Sperreinrichtung erforderlich.

Eine weitere bevorzugte Ausführungsform der Erfindung schließlich sieht vor, dass Wählhebelaufnahme, Wählhebellagerung und Kulissenstiftaufnahme einstückig ausgebildet sind. Hierdurch ergibt sich eine besonders einfache konstruktive Darstellung und kostengünstige Herstellung mit minimaler Bauteilanzahl; ferner wird eine direkte und spielfreie Kraftübertragung aufgrund der einstückigen Ausbildung der wesentlichen kraftübertragenden Elemente der Betätigungseinrichtung erhalten.

Im Folgenden wird die Erfindung anhand lediglich Ausführungsbeispiele darstellender Zeichnungen näher erläutert. Dabei zeigt.
- **Fig. 1**: in isometrischer Darstellung eine Ausführungsform einer Betätigungseinrichtung gemäß der vorliegenden Erfindung;
- **Fig. 2**: das zu der Betätigungseinrichtung gemäß **Fig. 1** gehörige Schaltschema mit Automatikschaltgasse und Sequenzschaltgasse;
- **Fig. 3**: in seitlicher Ansicht die Betätigungseinrichtung gemäß **Fig. 1****;** und
- **Fig. 4**: in einer **Fig. 1** entsprechenden Darstellung bei vergrößerter Ansicht die Betätigungseinrichtung gemäß **Fig. 1** und **3****;**

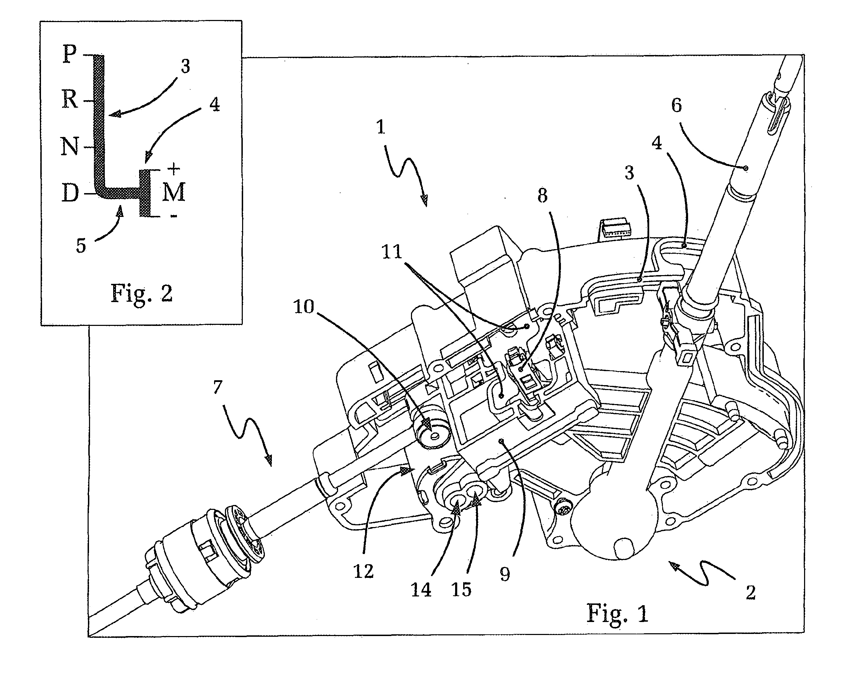

In **Fig. 1** ist eine Ausführungsform einer Betätigungseinrichtung für ein Automatikgetriebe gemäß der vorliegenden Erfindung dargestellt. Man erkennt zunächst einmal ein in der Darstellung der **Fig. 1** geöffnet gezeigtes Hebelgehäuse 1 mit einer Hebellagerung 2, einer Kulissenführung 3, 4 sowie mit einem Hebelarm 6 zur Aufnahme eines nicht dargestellten Knaufs des Wählhebels der Betätigungseinrichtung.

Ferner geht aus **Fig. 1** das hebelseitige Ende des hier als Seilzug 7 ausgebildeten Übertragungselements zur Übertragung der Schaltbefehle der Betätigungseinrichtung an das Fahrzeuggetriebe hervor. **Fig. 2** zeigt das Schaltschema der Betätigungseinrichtung. Man erkennt die Automatikschaltgasse 3, die Sequenzschaltgasse 4 zur manuellen Gangstufenänderung, sowie die Wählgasse 5 zum Wechsel zwischen Automatikschaltgasse 3 und Sequenzschaltgasse 4 durch seitliche Wählhebelbewegung.

Bei der dargestellten Ausführungsform erfolgt die Übertragung der Schaltbefehle - falls sich der Wählhebel 6 wie gezeigt in der Kulissenführung der Automatikschaltgasse 3 befindet - vom Wählhebel 6 über einen Kulissenstift 8 auf einen Schaltschlitten 9, und vom Schaltschlitten 9 über eine Anlenkung 10 über den Seilzug 7 zum Getriebe. Wählhebelaufnahme bzw. Wählhebellagerung 2 und Kulissenstiftaufnahme sind dabei als einstückiges Kunststoffleil ausgebildet.

Der Schaltschlitten 9 besitzt eine etwa H-förmige Kulissenausnehmung 11 zur Aufnahme und Übertragung der Schaltbefehle vom Wählhebel 6 mittels des Kulissenstifts 8 auf den Schaltschlitten 9. Wenn sich der Wählhebel wie in **Fig. 1** dargestellt in der Automatikschaltgasse 3 befindet, dann kommt der Kulissenstift 8 innerhalb des schmalen mittleren Balkens der H-förmigen Kulissenausnehmung 11 zur beidseitigen Anlage an die gegenüberliegenden Oberflächen der Kulissenausnehmung 11 im Schaltschlitten 9. In dieser mittleren Relativposition des Kulissenstifts 8 in der Kulissenausnehmung 11 des Schaltschlittens 9 werden sämtliche Schwenkbewegungen des Wählhebels 6 unmittelbar und praktisch spielfrei auf den Schaltschlitten 9 und damit auf den Seilzug 7 übertragen.

Wird der Wählhebel 6 andererseits - mittels Querbewegung entlang der Wählgasse 5 - aus der Automatikschaltgasse 3 in die Sequenzschaltgasse 4 verschwenkt, so folgt dieser seitlichen Schwenkbewegung auch der Kulissenstift 8. Der Kulissenstift 8 wird durch die Querbewegung des Wählhebels 6 entlang der Wählgasse 5 in die Sequenzschaltgasse 4 somit in die zeichnungsbezogen hintere Verbreiterung der H-förmigen Kulissenausnehmung 11 verlagert. Dort erfolgt jedoch keine Übertragung der Schaltbewegungen des Wählhebels 6 mehr auf den Schaltschlitten 9, da die wirksame Länge der Verbreiterung der H-förmigen Kulissenausnehmung 11 dem innerhalb der Sequenzschaltgasse 4 zum Tippen mit dem Wählhebel 6 zur Verfügung stehenden Schaltweg des Wählhebels 6 entspricht.

Dies bedeutet mit anderen Worten, dass durch die Verschwenkung des Wählhebels 6 aus der Automatikschaltgasse 3 in die Sequenzschaltgasse 4 eine kinematische Trennung zwischen dem Kulissenstift 8 und damit dem Wählhebel 6 einerseits und dem Schaltschlitten 9 und damit dem Seilzug 7 andererseits erfolgt. Daher kann der Wählhebel 6 in der Sequenzschaltgasse 4 vor und zurück bewegt werden und dabei entsprechende Schaltbefehle zum manuellen Gangwechsel auslösen, die elektronisch an das Getriebe übermittelt werden, ohne dass hierdurch der Schaltschlitten 9 oder der Seilzug 7 bewegt wird.

Um sicherzustellen, dass sich der Schaltzustand des Getriebes (in diesem Fall die Schaltposition "M") nicht verändert, solange sich der Wählhebel 6 in der Sequenzschaltgasse 4 befindet, ist - ebenso wie beim Stand der Technik - eine Sperreinrichtung erforderlich, die dafür sorgt, dass der Seilzug 7 seine Position solange beibehält, bis der Wählhebel 6 wieder in die Automatikschaltgasse 3 zurück geschwenkt wird und der Kulissenstift 8 somit wieder in Eingriff mit dem Schaltschlitten 9 kommt. Erfindungsgemäß jedoch wird zu diesem Zweck der bei Betätigungseinrichtungen für Automatikgetriebe zumeist ohnehin vorhandene elektromagnetische Sperraktuator 12 verwendet.

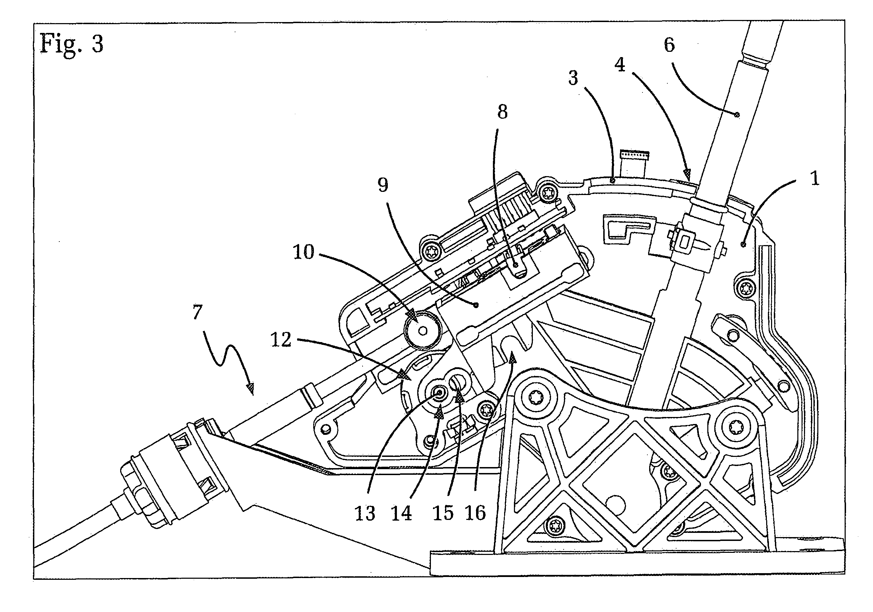

Denn der elektromagnetische Sperraktuator 12 wird zur Realisierung der Shiftlock-Sicherheitsfunktion ohnehin benötigt, wobei die Shiftlock-Funktion dafür sorgt, das nur bei getretenem Bremspedal aus den Schaltstellungen "P" und "N" heraus geschaltet werden und somit eine Fahrstufe eingelegt werden kann. Zur Realisierung der Shiftlock-Funktion sind am Schaltschlitten 9 zwei Sperrkammern 15 (für die Schaltstellung "N") und 16 (für die Schaltstellung "P", s. **Fig. 3**) angeordnet, in welche der bewegliche Anker des Sperraktuators 12 einfahren kann. Wenn der Anker in eine der Sperrkammern 15, 16 eingefahren ist, wird somit der Schaltschlitten 9 und damit auch der Seilzug 7 in seiner jeweiligen Position fixiert, und es können keine Schaltbefehle über den Seilzug 7 an das Getriebe übertragen werden. Ebenso ist der Wählhebel 6 über den in diesem Fall mit dem Schaltschlitten 9 in Eingriff stehenden Kulissenstift 8 blockiert, so dass dem Fahrer haptisch signalisiert wird, das die Shiftlock-Sperre aktiv ist.

Der Sperraktuator 12 mit seinem beweglichen Anker 13 sowie die am Schaltschlitten 9 angeordneten Sperrkammern 14, 15 und 16 sind besonders deutlich in **Fig. 3** ersichtlich. Die Sperrkammer 14 korrespondiert dabei mit der erfindungsgemäßen, zusätzlichen Sperrmöglichkeit für den Schaltschlitten 9, die dann zum Einsatz kommt, wenn sich der Wählhebel 6 wie in **Fig. 3** gezeigt in der Mittelposition "M" der Sequenzschaltgasse 4 bzw. in der Wählgasse 5 (vgl. **Fig. 2**) befindet. Dabei ist gleichzeitig der Kulissenstift 8 außer Eingriff mit dem Schaltschlitten 9, was bedeutet, dass keine Kraftübertragung zwischen Wählhebel 6 und Schaltschlitten 9 bzw. Seilzug 7 erfolgt, solange der Wählhebel 6 sich in der Sequenzschaltgasse 4 bzw. in der Wählgasse 5 befindet.

Die Sperrkammer 16 in **Fig. 3** hingegen dient der aus dem Stand der Technik bekannten Blockierung des Schaltschlittens 9 und damit auch des Seilzugs 7 sowie des Wählhebels 6 in der Parksperrenposition "P", um auf diese Weise die Shiftlock-Sperre zu realisieren.

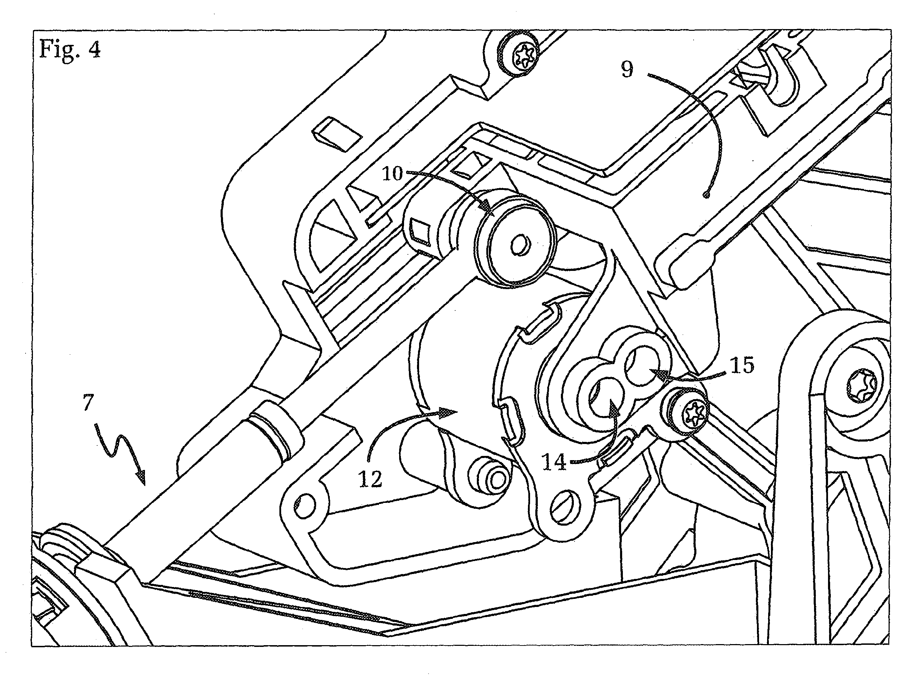

Aus der vergrößerten Darstellung der **Fig. 4** geht nochmals deutlich der elektromagnetische Sperraktuator 12 sowie die beiden Sperrkammern 14 und 15 hervor. Dabei dient die Sperrkammer 15 der Blockierung des Schaltschlittens 9, des Seilzugs 7 und des Wählhebels 6 in der Neutralstellung "N", während die Sperrkammer 14 erfindungsgemäß zur Blockierung von Schaltschlitten 9 und Seilzug 7 dann herangezogen wird, wenn sich der Wählhebel 6 in der Sequenzschaltgasse 4 bzw. in der Wählgasse 5 (vgl. **Fig. 2**) befindet.

Im Ergebnis wird somit deutlich, dass mit der Erfindung eine Betätigungseinrichtung für ein Automatikgetriebe geschaffen wird, bei der die zur Trennung zwischen Wählhebel und Übertragungselement sowie zur Sperrung des Übertragungselements während manueller Gangwechsel erforderliche Sperrkinematik konstruktiv maßgeblich vereinfacht werden kann.

Die erfindungsgemäße Betätigungseinrichtung ist zudem robust und sehr leichtgängig in der Bedienung. Ferner lassen sich Kosteneinsparungen gegenüber den aus dem Stand der Technik bekannten Betätigungseinrichtungen erzielen.

### Bezugszeichenliste

- 1: Hebelgehäuse
- 2: Hebellagerung
- 3: Automatikschaltgasse
- 4: Sequenzschaltgasse
- 5: Wählgasse
- 6: Wählhebel
- 7: Seilzug
- 8: Kulissenstift
- 9: Schaltschlitten
- 10: Seilzuganlenkung
- 11: Kulissenausnehmung
- 12: Sperraktuator
- 13: Magnetanker
- 14, 15, 16: Sperrkammer

## Patentansprüche

1. Betätigungseinrichtung zur Übertragung von Schaltbefehlen an ein Antomatikgetriebe eines Kraftfahrzeugs, die Betätigungseinrichtung umfassend einen in einer Wählgasse (5) zwischen einer Automatikschaltgasse (3) und einer
Sequenzschaltgasse (4) bewegbaren Wählhebel (6), einen Schaltschlitten (9) zur Weitergabe der Schaltbefehls au ein Getriebe-Übertragungselement (7), eine Trenneinrichtung (8, 11) zur Trennung der Kraftübertragung zwischen Wählhebel (6) und Scltaltachlitten (9).
**dadurch gekennzeichnet,**
**dass** die Betätigungseinrichtung eine aktuatoriche Shiftlock-Sperreinrichtung mit Sperraktuator (12) zur Blockierung des Wählhebels (8) in zurnindest einer Wählhebelstellung in der Automatikschalt gasse (3) umfasst, wobei der Sperraktuator (12) der Shiftlock-Sperreinrichtung zur Blockierung das Schaltschlittens (9) herangezogen wird, sobald der Wählhebel (16) entlang der Wählgasse (5) aus der Automatikschaltgasse (3) in die Sequenzschaltgasse (4) bewegt wird oder bei Eintritt des Wählhebels (6) in die Sequenzschaltgasse (4).

2. Betätigungseinrichtung nach Anspruch 1,
**dadurch gekennzeichnet,**
**dass** der Sperraktuator (12) durch einen elektromagnetischen Aktuator mit Ankerstift (13) gebildet ist.

3. Betätigungseinrichtung nach Anspruch 1 oder 2,
**dadurch gekennzeichnet,**
**dass** die Trenneinrichtung (8, 11) zur Trennung der Kraftübertragung zwischen Wählhebel (6) und Schaltschlitten (9) eine im Wesentlichen symmetrische, H-förmige Kulissenausnehmung (11) im Schaltschlitten (9) sowie einen mit dem Wählhebel verbundenen Kulissenstift (8) umfasst.

4. Betätigungseinrichtung nach Anspruch 1 bis 3,
**dadurch gekennzeichnet,**
**dass** Wählhebelaufnahme, Wählhebellagerung und Kulissenstiftaufnahme einstückig ausgebildet sind.

## Claims

1. Actuating device for transmitting shifting commands to an automatic gearbox of a motor vehicle, the actuating device comprising a selector lever (6) which can be moved in a selector gate (8) between an automatic selector gate (3) and a sequential selector gate (4), a shift carriage (9) for forwarding the shifting command to a gearbox transmission element (7), a disengaging device (8, 11) for disengaging the force transmission between the selector lever (6) and the shift carriage (9), **characterized in that** the actuating device comprises an actuator shift-lock device with a locking actuator (12) for blocking the selector lever (6) in at least one selector-lever position in the automatic selector gate (3), the locking actuator (12) of the shift-lock device being used for blocking the shift carriage (9), as soon as the selector lever (6) is moved along the selector gate (5) out of the automatic selector gate (3) into the sequential selector gate (4) or upon entry of the selector lever (6) into the sequential selector gate (4).

2. Actuating device according to Claim 1, **characterized in that** the locking actuator (12) is formed by an electromagnetic actuator with dart (13).

3. Actuating device according to Claim 1 or 2, **characterized in that**, in order to disengage the force transmission between the selector lever (6) and the shift carriage (9), the disengaging device (8, 11) comprises a substantially symmetrical, H-shaped guide recess (11) in the shift carriage (9) and a guide pin (8) which is connected to the selector lever.

4. Actuating device according to Claims 1 to 3, **characterized in that** the selector-lever receptacle, selector-lever mounting and guide-pin receptacle are configured in one piece.

## Revendications

1. Dispositif d'actionnement pour le transfert d'ordres de changement de rapports à une transmission automatique d'un véhicule automobile, le dispositif d'actionnement comprenant un levier de sélection (6) déplaçable dans une voie de sélection (5) entre une voie de changement de rapports automatique (3) et une voie de changement de rapports séquentielle (4), un chariot de changement de rapports (9) pour transférer les ordres de changement de rapport à un élément de transfert de boîte de vitesse (7), un dispositif de séparation (8, 11) pour la séparation du transfert de force entre le levier de sélection (6) et le chariot de changement de rapport (9),
**caractérisé en ce que**
le dispositif d'actionnement comprend un dispositif de verrouillage de changement de rapport à actionneur avec un actionneur de verrouillage (12) pour le blocage du levier de sélection (6) dans au moins une position de levier de sélection dans la voie de changement de rapports automatique (3), l'actionneur de verrouillage (12) du dispositif de verrouillage de changement de rapport étant utilisé pour bloquer le chariot de changement de rapport (9), dès que le levier de sélection (6) est déplacé le long de la voie de sélection (5) hors de la voie de changement de rapports automatique (3) dans la voie de changement de rapports séquentielle (4), ou lors de l'entrée du levier de sélection (6) dans la voie de changement de rapports séquentielle (4).

2. Dispositif d'actionnement selon la revendication 1,
**caractérisé en ce que**
l'actionneur de verrouillage (12) est formé par un actionneur électromagnétique avec une goupille d'ancrage (13).

3. Dispositif d'actionnement selon la revendication 1 ou 2,
**caractérisé en ce que**
le dispositif de séparation (8, 11) pour la séparation du transfert de force entre le levier de sélection (6) et le chariot de changement de rapport (9) comprend un évidement de coulisse (11) en forme de H, essentiellement symétrique, dans le chariot de changement de rapport (9) ainsi qu'une goupille de coulisse (8) connectée au levier de sélection.

4. Dispositif d'actionnement selon les revendications 1 à 3,
**caractérisé en ce que**
le logement de levier de sélection, le support sur palier de levier de sélection et le logement de goupille de coulisse sont réalisés d'une seule pièce.
